# EUROPEAN PATENT APPLICATION

(11) **EP 2 214 371 A1**
(43) Date of publication of application: **04.08.2010**
(21) Application number: 09001323.6
(22) Date of filing: 30.01.2009
(51) Int. Cl.: H04L 29/06, H04N 7/24

(54) **Undelayed rendering of streamed media object**

(71) Applicant: T-Mobile International AG, 53227 Bonn (DE)
(72) Inventor: Knight, Phil, Esher KT109PG (GB)
(74) Representative: COHAUSZ DAWIDOWICZ HANNIG & SOZIEN

(57) **Abstract**

This invention relates to a method for a nearly undelayed rendering of digital media objects on a client system as well as to a client system and a computer program product for executing the method, the client system being in communication with a server system over a network and comprising a memory, the media object being hold on the server system for download to the client system in a data stream, the method comprising the steps downloading an initial portion of the media object from the server system and prestoring it locally in the memory of the client system, receiving a user input requesting access to the media object, the user input entered on an input device of the client system, accessing the media object on the server system, establishing a communications channel between the server system and the client system for transmitting the media object from the server system to the client system, transmission of the media object representing data from the server system to the client system via the communications channel in a data stream, storing the data in a stream buffer on the client system, whereby after the user input is received the prestored initial portion of the media object is rendered on the client system.

## Description

The present invention relates generally to rendering of streamed media objects on a client system, and more particularly to a method and a computer program product for a nearly undelayed rendering of digital streamed media objects on a client system as well as a client system with means for such undelayed rendering.

Streaming in particular on the internet is a commonly used method to view visual content and to listen to audio content. There are numerous protocols that can be used for this, and which transmit the data in a stream, via a communications channel such that the data arrives at the client system and is displayed soon after it has been received, after having been buffered for a period long enough to compensate for any vagaries in the communication medium or stream dynamics.

An alternative method to view or to listen to media objects displayed or played on the client system is to download these media objects in their entirety and to hold the content locally at the client system on which it is to be rendered. When the user then elects to view or to listen the content it is accessed directly from the memory of the client system, typically a local disk drive, some form of RAM (Random Access Memory) or non volatile memory. As these media objects are locally stored on the client system the form of consumption of their data can be referred to as 'offline' because there is no need to establish a connection to the internet for accessing and rendering these media objects.

The conventional data consumption of the streamed and offline video and/or audio content has several disadvantages. Referring to a streaming process, i.e. the transmission of data from a server system within a communication network like the internet via a communications channel in a data stream, this form of data retrieval leads to a noticeable period between user's indication that he wishes to see and/or hear a particular piece of streamed content and the point this content becomes available for rendering on the client system. Typically major contributors to this delay are:
- the need to establish a communication path to the equipment hosting the content, particularly to the server system on which the streamed media object is stored and hold for download in a data stream;
- for the client system and server system to agree to a protocol and the attributes of the communications channel;
- for the server system to supply sufficient data to the client system such it can buffer an amount that can isolate the user experience from any vagaries on the overall communications process or other stream dynamics.

The delay can amount to several seconds in particular if low powered client systems and communications systems with high round trip times and/or low bit rates are involved, this can be the case particularly in mobile networks like GPRS or UMTS in the case of which the client system is a cellular mobile phone.

Offline viewing of content does not suffer from the potentially lengthy delays outlined above that streaming does, but does have the disadvantage that the entire contents of the video, audio or audio-visual item have to been downloaded on a client system and held locally thereon. This may be acceptable for some elements of content where the user is prepared to wait whilst they are downloaded and then subsequently view them offline, However, in the case where the media objects are required for immediate viewing there is a delay whilst it is downloaded.

This delay is aggravated when the communication channel involved is of a lower bit rate and/or a long round trip time.

A method that can be used to circumvent both of the above mentioned disadvantages is to speculatively download the audio, video or audio-visual data through some means onto the local client system storage without user interaction and in advance of the user requesting it. This might be the case for instance for a news clip with audio-visual data where user behaviour has clearly indicated a propensity to consume news on a regular basis. When the user then indicates that he wishes to see or listen to the media object it can be displayed immediately from a local file.

This method, however, has disadvantages, too. These disadvantages of speculative downloads are that the content requested may never be accessed by the user, and consequently there may be a substantial amount of data to be downloaded in advance when in fact only a fraction of it is ever accessed in the end by the user. This can be a serious drawback when the amount of data is large enough to significantly load the communications network, or if for instance the tariff being used for the supply of data services is charged per MByte, or is limited to an amount of data over a period through a fair use policy or tariff conditions, In addition the client server itself may have limited ability in terms of memory available to store speculative downloads, this might be the case for mobile devices like cell phones in particular.

In view of various disadvantages of the methods for consuming media data as outlined above, it would be desirable to avoid these and other problems associated with prior art methods. Thus, there is a need for a new technique to provide a nearly undelayed rendering of digital media objects once the user has indicated interest in viewing or listening to this media content.

The object of this invention is to reduce the time from the point when the user indicates through some form of keyboard or other action that he wishes to see some video or audio content to the point where the content first becomes usable to him.

This object is solved by the features of independent claims 1, 13 and 15. Preferred embodiments of the invention are subject of their dependent claims.

According to an overall aspect of the invention its basis is to use a hybrid mechanism consisting of a joint use of streaming and download protocols.

According to the invention, in particular, there is provided a method for a nearly undelayed rendering of a digital media object on a client system, the client system being in communication with a server system over a network and comprising a memory, the media object being hold on the server system for download to the client system in a data stream, the method comprising the steps of downloading an initial portion of the media object from the server system and prestoring it locally in the memory of the client system, receiving a user input requesting access to the media object, the user input entered on an input device of the client system, accessing the media object on the server system, establishing a communications channel between the server system and the client system for transmitting the media object from the server system to the client system, transmission of the media object representing data from the server system to the client system via the communications channel in a data stream, storing the data in a stream buffer on the client system, whereby after the user input is received the prestored initial portion of the media object is rendered on the client system.

In this connection the term 'media object' means any kind of media content, particularly an audio, video or audio-visual item. The client system can be a personal computer being connected with the internet to a server system on which media content is hold, or it can be a mobile device, in particular a cellular mobile phone, being connected to a server system via a GPRS (General Package Radio Service) or UMTS (Universal Mobile Telecommunication System) network.

According to the invention it is advantageous to download an initial portion of the media object that could speculatively be requested by a user to the client system in advance. In this connection the term 'initial portion' means data representing the very beginning of the media object if it is played or displayed on the client system. At the time the initial portion is prestored locally in a memory of the client system the user has not indicated interest in viewing or listing to the media object yet. According to the invention it is provided that after this interest is indicated to the client system and it receives a user input requesting access to the media object the prestored initial portion of the media object is rendered on the client system. In particular, an audio item is played or a video item is displayed on a display device of the client system. Thus, the delay in rendering the streamed media object is bridged.

In a preferred embodiment the initial portion of the media object is downloaded from the server system when a hypertext object comprising a link to the media object is requested from the client system. The hypertext object can be an internet website for instance with a lot of links to different media objects stored on one or different server systems.

Further preferably, a set of user behaviour, profile and/ or history data can be used via an algorithm to determine what media objects linked in the hypertext object may be of interest to the user and therefore worth speculatively downloading.

According to a further preferred embodiment, the user input can be entered by a user pressing a button on an input device of the client system, thus indication interest in and requesting access to a special media object.

Further preferably, the initial portion of the media object can be rendered immediately after the user input is received and at least while the communication channel is established. This enables the user to regard or to listen to the media object without any delay by loading it from the local memory of the client system and consuming its initial portion as 'offline data'. In this advantageous embodiment of the invention the time needed for accessing the media object on the server system, i.e. the verification of its availability on the server system, and the time needed for establishing a communications channel to the server system is bridged.

Most preferably, the initial portion of the media object is continuously rendered while the media object representing data are transmitted to the client system. Accordingly, it is advantageously possible to bridge the time needed to download and buffer a certain amount of data of the media object so that it can be played or displayed on the client system without any vagaries of connection and stream dynamics.

In a further advantageous embodiment, the initial portion of the media object is rendered after the media object is accessed on the server system. Accordingly, the locally stored initial portion of the media object is only rendered in the case the original media object is available for download on the server system.

According to a further preferred embodiment, the initial portion of the media object is such that if it is rendered on the client system its duration covers at least the time to connect the client system with the server system. Thus, rendering of the locally stored initial portion can bridge the term needed to connect the client system with the server system.

Preferably, the duration of the initial portion covers the time to fill the stream buffer with data of the media object. Accordingly, it is advantageously possible to bridge the time needed for buffering a sufficient amount of data of the media object to make it available for rendering. Additionally, it is preferred that the duration of the initial portion covers a margin to cater for the vagaries of connection and communications setup.

Further preferably, the transmission of the data stream is fast forwarded after its request to allow synchronization with the rendered prestored initial portion of the media object. Accordingly, it is advantageously possible to switch seamlessly across from the initial portion of the media object to the newly transmitted data when the data stream has been synchronized to the same point as the rendered initial portion has reached or when the rendering of the initial portion terminates. This means a switch over between the hybrid downloads, i.e. 'offline data' in the form of the prestored initial portion of the media object on the one hand and the 'streamed and buffered data' of the media object itself on the other hand.

Accordingly, the user is able to view or to listen to the whole media object and gets a rapid response to his request for the media object with a very limited amount of preloaded data.

Further preferably, the time to switch across is less than the duration of the initial portion of the media object. In this case, it is possible to switch between the hybrid downloads without the user becoming aware of changing the data source.

According to a further aspect of the invention, there is further provided a client system on which a nearly undelayed rendering of a digital media object is achieved. The client system being in communication with a server system over a network, the media object being hold on the server system for download to the client system in a data stream, the client system comprising a memory and means for downloading an initial portion of the media object from the server system and means for prestoring it locally in the memory of the client system, an input device for receiving a user input requesting access to the media object, means for accessing the media object on the server system, means for establishing a communications channel between the server system and the client system for transmitting the media object from the server system to the client system, means for transmitting the media object representing data from the server system to the client system via the communications channel in a data stream, a stream buffer, in particular in the memory, for storing the data on the client system, and means for rendering the prestored initial portion of the media object after the user input is received.

In particular the client system is arranged in that the method according to the first aspect of the invention can be executed on it.

In a preferred embodiment, the client system is a mobile device, in particular a cellular mobile phone.

According to a third aspect of the invention, there is further provided a computer program product for a nearly undelayed rendering of a digital media object on a client system, the client system being in communication with a server system and comprising a memory, the media object being hold on the server system for download to the client system in a data stream, the computer program product comprising a computer program being stored in the memory of the client system, the computer program comprising software means to perform the method according to the first aspect of the invention when it is executed on the client system.

These and other objects, features and advantages of the present invention will be come more apparent from reading of the following detailed description of preferred embodiments and accompanying drawings.
- Fig. 1: shows a typical information flow for the access of streamed content from a remote content server and its display to the requesting user according to the state of the art,
- Fig. 2: shows an information flow for the access of streamed content from a remote content server and the intervening display of previous download initial elements of the content according to the invention

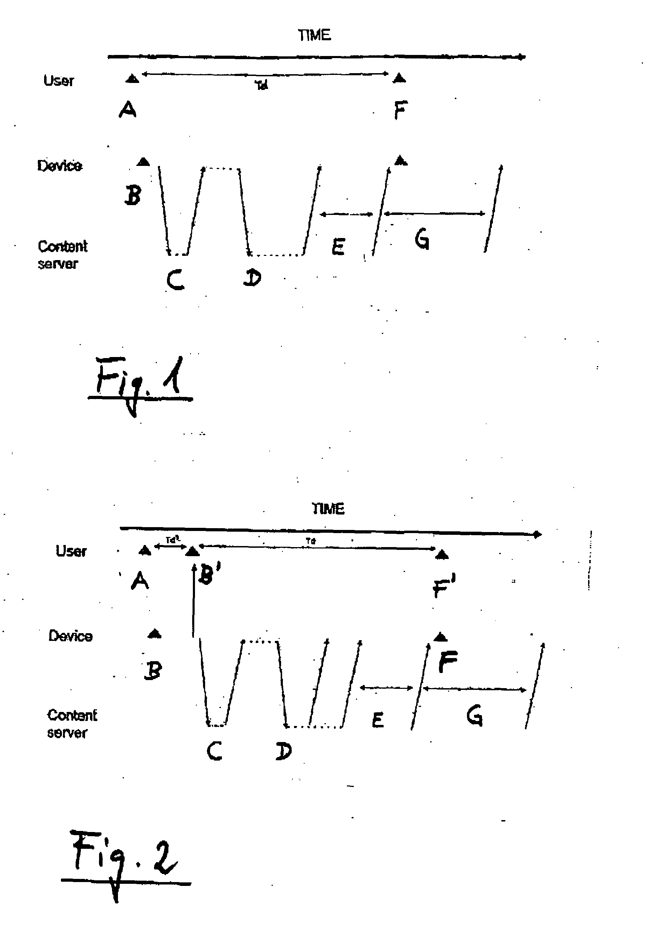

Fig. 1 illustrates the individual steps taken when a certain media object shall be rendered on the client system, generally indicated as 'device', in relation to a time line, the media object being hold on a server system for a streamed download, the server system being generally indicated as 'content server'.

At a first point of time A a user requests a specific content by pressing a button on an input device of the client system, in particular a key of a keyboard or of a human man interface device. The device receives the request and sets up a communication channel to the media object, generally referred to as 'content', at a second point of time B. The communications channel is then set up via an agreed protocol at point C. After that the content is requested, point D, and the stream begins sending sufficient data of the media object to fill the buffer of the device at point E. When the stream buffer has filled the device begins to render the content to the user at a third point of time F. The time interval between the first point of time A and the third point of time F is indicated with Td representing the total delay between the user initiated request and the first point the streamed content becomes available for rendering on the client system. After the rendering of the prestored offline content has started the stream continues sending the reminder of the content to the client system, point G. Fig. 1 indicates the processing time within the client system/ device and the server system/ content server.

According to the invention and as illustrated in fig. 2 the user requests a specific content at a first point of time A. The client system/ device receives the request and checks for prestored initial elements of the content, point B, and immediately renders it. The rendering begins at a second point of time B'. The time difference between the first point of time A and the second point of time B' is indicated with Td' representing the delay between the user initiated request and the start of downloaded prestored content. This delay is not visible to the end user as it is too short to be recognized.

The device then sets up a communications channel to the content server at point B. After the communications channel is established the client server and the content server agree to a certain protocol, point C. Then, the specific content is requested, point D, and the stream begins sending sufficient data to fill the buffer of the device, point E.

The device fast forwards the stream, indicated by F, to allow synchronization with the downloaded initial content elements. When the stream has been synchronized to the same point as the initial portion of the media object has reached the feed is switched from the download source to the streamed source at a third point of time F'. After that streaming of the content continues, indicated by G.

A further idea of the invention is that through some means a client or a server side application calculates that the probability of a user wanting access to some particular piece of audio or visual content at some time in the future is sufficiently high that it should be the subject of hybrid download.

In this case the first portion of the media object is downloaded to the client system and stored thereon. This is done in such a way that only sufficient data of the media object is downloaded such that if it were played locally to the user, the duration would be sufficient to the cover the time to connect to the content and to fill any stream buffer or download buffer respectively plus a margin to cater for the vagaries of connection and communications setup.

When the client then accesses the stream a variety of processing can be applied, which have various benefits to the user experience for example:
In a first embodiment a connection is initiated to the data source, typically in the internet, the cache of area of the client system memory where hybrid downloads are stored is then searched and if the prestored media object is found, it is rendered immediately on the client system, for example on a cell phone. Whilst this initial part of the media object is being rendered on the client system to the user, a connection to the source media is made and sufficient of the media is received such that the received media can be rapidly advanced such that it can be synchronised with the media being played from the cache and switched seamlessly across from the stored segment of the content to the newly downloaded or streamed content. The time taken to do this should be less than the duration of the cached segment of the content such that the user is unaware of the switch. The user experience thus has the rapid response of a downloaded clip, but with a very limited amount of pre-loaded data.
In a further embodiment a connection is initiated to the data source, typically on the internet. If a connection can be made, the media object found, then the cache or area of the client system memory where hybrid downloads are stored is then searched. If the media object is found in the client system's memory then it is rendered immediately on it to the user, a connection to the source media is then made and sufficient of the media is received on the client system such that the received media can be rapidly advanced to such that it can be synchronised with the media being played from the cache and switched seamlessly across to the stream, and away from the downloaded and prestored initial portion of the media object. The time taken to do this should be less than the duration of the cached segment of the content such that the user is unaware of the switch. The user experience thus has a faster response time then with a wholly streamed clip, but with a very limited amount of pre-loaded data.

The advantages of this technique are that the user experience is of a near immediate response to the request for media, and that the amount of speculatively downloaded data is minimised to a fraction of that required where the complete piece of media has to be downloaded.

## Claims

1. A method for a nearly undelayed rendering of a digital media object on a client system, the client system being in communication with a server system over a network and comprising a memory, the media object being hold on the server system for download to the client system in a data stream, the method comprising the steps:
a. downloading an initial portion of the media object from the server system and prestoring it locally in the memory of the client system,
b. receiving a user input requesting access to the media object, the user input entered on an input device of the client system,
c. accessing the media object on the server system,
d. establishing a communications channel between the server system and the client system for transmitting the media object from the server system to the client system,
e. transmission of the media object representing data from the server system to the client system via the communications channel in a data stream,
f. storing the data in a stream buffer on the client system, whereby the prestored initial portion of the media object is rendered on the client system when the user input is received.

2. A method according to claim 1, wherein the initial portion of the media object is downloaded from the server system when a hypertext object comprising a link to the media object is requested from the client system.

3. A method according to claim 1 or 2, wherein the user input in entered by a user pressing a button on an input device of the client system.

4. A method according to claim 1, 2 or 3, wherein the initial portion of the media object is rendered immediately after the user input is received and at least while the communications channel is established.

5. A method according to claim 4, wherein the initial portion of the media object is rendered while the media object representing data are transmitted to the client system.

6. A method according to claim 1, 2 or 3, wherein the initial portion of the media object is rendered after the media object is accessed on the server system.

7. A method according to one of the foregoing claims, wherein the initial portion of the media object is such that if it is rendered on the client system its duration covers at least the time to connect the client system with the server system.

8. A method according to claim 7, wherein the duration of the initial portion covers the time to fill the stream buffer with data of the media object.

9. A method according to claim 7 or 8, wherein the duration of the initial portion covers a margin to cater for the vagaries of connection and communications set up.

10. A method according to one of the foregoing claims, wherein the transmission of the data stream is fast forwarded after its request to allow synchronization with the rendered prestored initial portion of the media object.

11. A method according to claim 10, wherein the rendering of the media object switches seamlessly across from the initial portion of the media object to the newly transmitted data when the data stream has been synchronized to the same point as the rendered initial portion has reached or when the rendering of the initial portion terminates.

12. A method according to claim 11, wherein the time to switch across is less than the duration of the initial portion of the media object.

13. Client system for a nearly undelayed rendering of a digital media object, being in communication with a server system over a network, the media object being hold on the server system for download to the client system in a data stream, the client system comprising a memory and
a. means for downloading an initial portion of the media object from the server system and storage means for prestoring it locally in the memory of the client system,
b. an input device for receiving a user input requesting access to the media object,
c. means for accessing the media object on the server system,
d. means for establishing a communications channel between the server system and the client system for transmitting the media object from the server system to the client system,
e. means for transmitting the media object representing data from the server system to the client system via the communications channel in a data stream,
f. a stream buffer for storing the data on the client system, and
g. means for rendering the prestored initial portion of the media object when the user input is received.

14. Client system according to claim 13, whereby it is a cellular mobile phone.

15. A computer program product for a nearly undelayed rendering of a digital media object on a client system, the client system being in communication with a server system and comprising a storage means, the media object being hold on the server system for download to the client system in a data stream, the computer program product comprising a computer program being stored in the storage means of the client system and comprising software means to perform the method according to one of the claims 1 to 12 when it is executed on the client system.
